# EUROPEAN PATENT APPLICATION

(11) **EP 4 693 480 A1**
(43) Date of publication of application: **11.02.2026**
(21) Application number: 24778114.9
(22) Date of filing: 28.03.2024
(51) Int. Cl.: H01M 4/48, H01M 4/13, H01M 4/139, H01M 4/36, H01M 4/62

(54) **NEGATIVE ELECTRODE SHEET, BATTERY AND ELECTRIC DEVICE**

(30) Priority: 31.03.2023 CN 202310338119
(71) Applicant: BYD Company Limited, Shenzhen, Guangdong 518118 (CN)
(72) Inventor: SUN, Huajun, Shenzhen, Guangdong 518118 (CN); WANG, Xuewan, Shenzhen, Guangdong 518118 (CN)
(74) Representative: Mathys & Squire
(86) International application number: PCT/CN2024/084308
(87) International publication number: WO 2024/199328

(57) **Abstract**

A negative electrode sheet, a battery and an electric device. The negative electrode sheet comprises a current collector and a negative electrode active material layer that coats at least one surface of the current collector, wherein the negative electrode active material layer comprises a negative electrode active material, an inorganic porous material and a binder, and the inorganic porous material accounts for 0.1%-5% of the total mass of the negative electrode active material layer.

## Description

### PRIORITY INFORMATION

The present disclosure claims priority and benefits to Patent Application No. 202310338119.9, filed with the China National Intellectual Property Administration on March 31, 2023, which is incorporated herein by reference in its entirety.

### TECHNICAL FIELD

The present disclosure relates to the field of battery technologies, and in particular, to a negative electrode sheet, a battery, and an electric device.

### BACKGROUND

Secondary batteries (e.g., lithium-ion batteries) are widely used in new energy vehicles, portable electronic products, and large-scale energy storage devices due to their advantages such as high working voltage, high energy density, long cycle life, and small self-discharge. Performance of the secondary batteries mainly depends on physicochemical properties of positive and negative electrode sheets. Carriers in the negative electrode sheets (e.g., lithium ions) have high transfer impedance which leads to severe polarization, thereby limiting rate performance of the secondary batteries (e.g., lithium-ion batteries).

The conventional technologies modify the negative active materials to increase the mobility of carriers (e.g., lithium ions) in the negative electrode sheets, thereby improving the rate performance of the batteries. However, modifying the negative active materials causes relatively high costs, and only improves diffusion of carriers (e.g., lithium ions) in the negative active materials, without significantly improving diffusion of carriers between negative active materials in the electrode sheets.

Therefore, it is necessary to provide a new negative electrode sheet that satisfies application requirements of high-rate performance in secondary batteries (e.g., lithium-ion batteries).

### SUMMARY

In view of this, the present disclosure provides a negative electrode sheet that can satisfy high-rate performance of a secondary battery.

A first aspect of the present disclosure provides a negative electrode sheet, wherein the negative electrode sheet includes a current collector and a negative electrode active material layer coated on at least one surface of the current collector; the negative electrode active material layer including a negative electrode active material, an inorganic porous material, and a first binder; and the inorganic porous material accounting for 0.1% to 5% of total mass of the negative electrode active material layer.

The negative electrode sheet of the present disclosure contains 0.1% to 5% of inorganic porous material, which can effectively improve ionic conductivity of the negative electrode sheet and improve rate performance of the negative electrode sheet and a corresponding battery. Pores in the inorganic porous material can absorb electrolyte. Adding the inorganic porous material to the negative electrode sheet not only provides a buffer pool for the electrolyte in the negative electrode sheet but also improves the pore structure of the negative electrode sheet. During battery charging/discharging, the electrolyte permeates from the pores of the inorganic porous material to the negative active material, shortening a conduction path of carriers (lithium ions), thereby reducing or mitigating polarization phenomena in the negative electrode sheet. If content of the inorganic porous material in the negative electrode sheet is excessively high, it adversely affects conductivity of the negative electrode sheet; and if the content of the inorganic porous material in the negative electrode sheet is excessively low, improvement in ionic conductivity of the negative electrode sheet is insignificant. In this way, when the inorganic porous material accounts for 0.1% to 5% of the total mass of the negative electrode active material layer in the present disclosure, rate performance of the negative electrode sheet and the battery can be effectively improved.

A second aspect of the present disclosure provides a battery, including a positive electrode sheet, an electrolyte, a separator, and the negative electrode sheet provided in the first aspect.

Because the battery includes the negative electrode sheet provided in the first aspect of the present disclosure, the battery has high rate performance, and meets more application requirements.

A third aspect of the present disclosure provides an electric device, including the battery provided in the second aspect of the present disclosure.

### BRIEF DESCRIPTION OF THE DRAWINGS

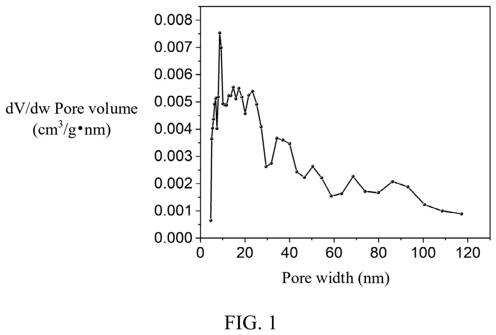

FIG. 1 is a pore structure distribution curve of an inorganic porous material (mesoporous silica) in the present disclosure.

### DESCRIPTION OF EMBODIMENTS

The present disclosure is further described below by using embodiments and comparative examples, which are merely used to illustrate the present disclosure, and the present disclosure is not limited to the following embodiments. Any modification or equivalent replacement of the technical solutions of the present disclosure without departing from the scope of the technical solutions of the present disclosure shall fall within the protection scope of the present disclosure.

An embodiment of the present disclosure provides a negative electrode sheet, wherein the negative electrode sheet includes a current collector and a negative electrode active material layer coated on at least one surface of the current collector; the negative electrode active material layer including a negative electrode active material, an inorganic porous material, and a first binder; and the inorganic porous material accounting for 0.1% to 5% of total mass of the negative electrode active material layer.

The negative electrode sheet of the present disclosure contains 0.1% to 5% of inorganic porous material, which can effectively improve ionic conductivity of the negative electrode sheet and improve rate performance of the negative electrode sheet and a corresponding battery. Pores in the inorganic porous material can absorb electrolyte. Adding the inorganic porous material to the negative electrode sheet not only provides a buffer pool for the electrolyte in the negative electrode sheet but also improves the pore structure of the negative electrode sheet. During battery charging/discharging, the electrolyte permeates from the pores of the inorganic porous material to the negative active material, shortening a conduction path of carriers (lithium ions), thereby reducing or mitigating polarization phenomena in the negative electrode sheet and improving rate performance of the negative electrode sheet and the battery. In addition, the inorganic porous material has stable chemical properties and does not destroy electrochemical reaction systems of the battery.

The inorganic porous material itself has relatively poor conductivity and energy storage characteristics (i.e., converting chemical energy into electric energy during storing/releasing lithium ions). When content of the inorganic porous material in the negative electrode sheet is excessively high (greater than 5%), it affects conductivity of the negative electrode sheet and also indirectly reduces content of the negative active material, which in turn affects energy density of the negative electrode sheet. When the content of the inorganic porous material is excessively low (less than 0.1%), improvement in rate performance of the battery is insignificant. Therefore, the content of the inorganic porous material in the negative electrode sheet is critical to the present disclosure.

In some implementations of the present disclosure, the inorganic porous material accounts for 0.2% to 3% of the total mass of the negative electrode active material layer.

When the inorganic porous material accounts for 0.2% to 3% of the total mass of the negative electrode active material layer, even dispersion of the inorganic porous material in the negative electrode sheet can be ensured, a function of homogenizing the pore structure of the electrode sheet of can be achieved, an electrolyte diffusion path is further shortened, and lithium ion transfer impedance is reduced, thereby improving polarization of the electrode sheet.

The content of the inorganic porous material in the negative electrode sheet may be measured by using a thermogravimetric testing method. The testing method includes: after scraping a first solid substance with removed carriers (e.g., lithium ions) from the current collector, subjecting it to acid washing with dilute hydrochloric acid followed by drying at 120°C for 2h; weighing a specific mass (m₁) of the first solid substance and placing it in a sample pan of a TA TGA 2050 thermogravimetric analyzer; and pyrolyzing in an air atmosphere while heating to 800°C, where a residual mass is m₂. Percentage content of inorganic porous material = (residual mass (m₂)/first solid substance (m₁))*100%.

In the present disclosure, the negative electrode active material layer may be coated on one surface of the current collector. The negative electrode active material layer may alternatively be coated on both surfaces of the current collector. When the negative electrode active material layer is coated on both surfaces of the current collector, the thickness, the surface density, the component content, and the like of the negative electrode active material layers respectively located on both surfaces of the current collector may be independently designed according to application requirements, and may be the same or different.

In the present disclosure, the negative electrode active material may be a carbon-based material.

The carbon-based material may be one or a combination of artificial graphite, natural graphite, soft carbon, hard carbon, mesophase carbon microbeads, and carbon fiber.

In the present disclosure, the current collector may be any one of copper foil, carbon coated copper foil, polymer coated copper foil, carbon cloth, carbon nanotube film, or carbon paper.

In the present disclosure, the current collector may alternatively be any one of aluminum foil, carbon coated aluminum foil, and polymer coated aluminum foil (e.g., used for a sodium-ion battery negative current collector).

In the present disclosure, the binder includes one or a combination of styrene butadiene rubber (SBR), carboxymethyl cellulose (CMC), polyacrylic acid (PAA), polyacrylic ethylene acrylic acid (PEAA), sodium alginate, carboxymethyl chitosan, polyacrylonitrile (PAN), and polyvinyl alcohol (PVA).

In some implementations of the present disclosure, a porosity of the negative electrode sheet is 20% to 60%.

In the present disclosure, the negative electrode sheet includes the inorganic porous material. It will be understood that the pores of the negative electrode sheet include pores of the inorganic porous material, gaps formed by disorderly deposition of the inorganic porous material and the negative electrode active materials, and gaps formed after disorderly deposition of the negative electrode active materials. The porosity of the negative electrode sheet is in a range of 20% to 60%, shuttle efficiency of the carrier (lithium ion) in the negative electrode sheet is good, and the negative electrode sheet and the battery have high rate performance. In addition, the negative electrode sheet has a high liquid storage capacity, which can provide more sufficient electrolytes in a battery cycle process and increase the cycle life of the battery. For example, the porosity of the negative electrode sheet may be 20%, 30%, 40%, 50%, 60%, or the like.

In the present disclosure, the porosity of the negative electrode sheet is further preferably 30% to 50%. If the porosity of the negative electrode sheet is within this range, higher mechanical performance of the negative electrode sheet can be ensured, and cycle stability of the battery can be further improved.

A method for determining the porosity of the negative electrode sheet is: cutting the negative electrode sheet into a membrane piece with a specific area, drying the membrane piece in a vacuum drying oven at 120°C for 12h, taking it out and putting it in a dryer for cooling, and then testing the porosity. First, a thickness of a sample is measured by using a thousandth gauge (a thickness of the current collector foil is deducted), an apparent volume (V1) of the sample is calculated according to a surface area and the thickness of the sample; and a true volume (V2) of the sample is measured by using a true density analyzer (a volume of the current collector foil is deducted). It can be obtained that: the porosity of the negative electrode sheet = (true volume (V2)/apparent volume (V1))*100%.

In some implementations of the present disclosure, the liquid absorption rate of the negative electrode sheet is 2 to 8 mg/min.

It will be understood that the inorganic porous material filled in the negative electrode sheet changes the pore structure of the negative electrode sheet, so that the liquid absorption rate of the negative electrode sheet is 2 to 8 mg/min, and the corresponding battery has relatively high rate performance.

The liquid absorption rate of the negative electrode sheet refers to an amount of electrolyte absorbed by the negative electrode sheet in unit time. A method for measuring the liquid absorption rate of the negative electrode sheet is: cutting the negative electrode sheet into a membrane piece with a specific area, drying the membrane piece in a vacuum drying oven at 120°C for 12h, taking it out and putting it in a dryer for cooling, and then testing the porosity; and taking a 2 cm × 5 cm negative electrode sheet and fixing it on the stage of an SDC-2000S contact angle tester; vertically dropping a specific mass (m) of electrolyte onto the negative electrode sheet via a syringe; recording the time (t) required for complete absorption of the electrolyte using a camera: liquid absorption rate of the negative electrode sheet = mass of the dropped electrolyte (m)/time for complete absorption (t); and repeating the test five times at different positions of the electrode sheet to obtain an average value. The electrolyte used in the present disclosure is as follows: Ethylene carbonate, dimethyl carbonate, and ethyl methyl carbonate are mixed according to a volume ratio of 1:1:1 to prepare an electrolyte containing 1M LiPF₆; and the test temperature is 25°C. Notes: The test results may be slightly different depending on the electrolyte type and the test environment.

In some implementations of the present disclosure, a dielectric constant of the inorganic porous material is ε, where 0<ε≤50.

In the present disclosure, the dielectric constant of the inorganic porous material in the negative electrode sheet is in the above range, so that a contact interface between the negative electrode sheet and the electrolyte can be stabilized, side reaction between the negative electrode sheet and the electrolyte can be reduced or relieved, Coulombic efficiency of the battery can be improved, and the cycle life of the battery can be further increased.

In the present disclosure, the dielectric constant ε of the inorganic porous material is further preferably 0<ε≤10. That is, a lower dielectric constant of the inorganic porous material indicates improved performance when application requirements are met. Schematically, the dielectric constant of the inorganic porous material may be, but is not limited to, 0.5, 1, 1.56, 3, 3.6, 6, 6.5, 8.8, or 10.

A method for measuring the dielectric constant of the inorganic porous material is: measuring the dielectric constant of a sample by using an Agilent Technologies E8362B vector network analyzer, with the measurement performed at frequencies ranging from 8.2 to 12.4 GHz. Powder to be tested (mass M1) and paraffin (mass M2) are evenly mixed by heating in a ratio of M1:M2 = 1:4, then cast into a copper standard flange. After solidification in air, a cuboid sample with 22.86 mm (length) × 10.16 mm (width) × 2.52 mm (thickness) is obtained for testing. A real part of the dielectric constant in the test result is the dielectric constant ε of the first inorganic porous material.

In some implementations of the present disclosure, the inorganic porous material includes at least one of: porous oxide of Si, porous nitride of Si, porous fluoride of Si, porous oxide of Ti, porous nitride of Ti, porous fluoride of Ti, porous oxide of Zn, porous nitride of Zn, porous fluoride of Zn, porous oxide of Mg, porous nitride of Mg, porous fluoride of Mg, porous oxide of Zr, porous nitride of Zr, porous fluoride of Zr, porous oxide of Ca, porous nitride of Ca, porous fluoride of Ca, porous oxide of Zn, porous nitride of Zn, porous fluoride of Zn, porous oxide of Ba, porous nitride of Ba, or porous fluoride of Ba.

In some implementations of the present disclosure, the inorganic porous material is further preferably at least one of porous silica, porous titanium oxide, porous alumina, or porous boehmite. The above several types of inorganic porous materials have relatively superior dielectric properties. When filled between the negative active materials, the inorganic porous materials help reduce side reactions at the negative electrode sheet interface; exhibit some mechanical strength, enabling effective mitigation of pore structure heterogeneity in the negative electrode sheet caused by expansion and contraction of the negative active material during battery charging and discharging; demonstrate stable chemical properties without disrupting the electrochemical reaction systems inside the battery; provide excellent thermal insulation to improve battery safety performance; and offer lower costs satisfying industrial-grade application requirements. In addition, preparation processes of the above several types of inorganic porous materials are relatively mature, allowing tunable pore structures and interface activity according to requirements. Therefore, when the above several types of inorganic porous materials are filled between the negative electrode active materials, it can effectively improve the specific capacity, the rate performance, the cycle life, and the safety performance of the battery.

In some implementations of the present disclosure, the inorganic porous material includes mesopores, and a volume of the mesopores accounts for 10% to 95% of a total pore volume of the inorganic porous material.

Internationally, pores are generally classified into three categories according to their sizes: micropores, mesopores (i.e., intermediate pores), and macropores. Pores with a bore diameter less than 2 nm are micropores; pores with a bore diameter in a range of 2 to 50 nm are mesopores; and pores with a bore diameter greater than 50 nm are macropores. The mesopores of the inorganic porous material have a high electrolyte adsorption capacity and can be used as a buffer pool of the electrolyte in the negative electrode sheet to provide carriers continuously during the cycle of the battery and increase the cycle life of the battery. In addition, during the battery charging and discharging process, the pore structure in the negative electrode sheet is dynamically changed, which affects diffusion of the electrolyte and transport of the carriers, resulting in uneven carrier ion fluxes. By adding the inorganic porous material with 10% to 95% mesopore content to the negative electrode sheet, fluxes during a negative electrode change process can be homogenized, a diffusion distance of carriers to the negative active material layer can be shortened, and the rate performance of the battery can be improved.

When the volume of the mesopores accounts for 10% to 95% of the total pore volume of the inorganic porous material, the cycle life and the rate performance of the negative electrode sheet and the corresponding battery are better.

The mesopore volume of the inorganic porous material is obtained based on a ratio of the pore volume of the mesopores (the pore size is 2 to 50 nm) to a total cumulative pore volume in a BET test result of the inorganic porous material.

In some specific implementations of the present disclosure, further preferably, the volume of the mesopores accounts for 40% to 95% of the total pore volume of the inorganic porous material. Thus, when the mesopore volume of the inorganic porous material in the present disclosure is in the above range, the cycle life and the rate performance of the battery are better.

In some implementations of the present disclosure, the inorganic porous material further includes macropores, and a volume of the macropores accounts for 5% to 40% of the total pore volume of the inorganic porous material. The macropores in the inorganic porous material provide a channel for transport of the electrolyte, and electrolyte ions stored in the mesopores diffuse to the surface of the negative electrode active material through the macropore channel, thereby shortening the carrier diffusion path in the negative electrode sheet, and further improving the rate performance of the battery.

The macropore volume of the inorganic porous material is obtained based on a ratio of the pore volume of the macropores (the pore size >50 nm) to the total cumulative pore volume in the BET test result of the inorganic porous material.

In some implementations of the present disclosure, the inorganic porous material has an average particle size of 10 to 1000 nm.

The average particle size of the inorganic porous material disclosed in the present invention is in the range of 10 to 1000 nm, which can meet use requirements of negative electrode active materials in different particle size ranges, achieve a better filling effect, and further facilitate absorption and diffusion of the electrolyte. For example, the particle size of the inorganic porous material may be 10 nm, 50 nm, 100 nm, 200 nm, 300 nm, 400 nm, 600 nm, 800 nm, 900 nm, or 1000 nm.

In the present disclosure, the average particle size of the inorganic porous material is further preferably 200 to 1000 nm. When the average particle size of the inorganic porous material is too small and surface energy is too large, this will affect dispersibility of the inorganic porous material in the negative electrode sheet. When the average particle size of the inorganic porous material is too large, this will affect a contact effect of the inorganic porous material with the negative electrode active material.

A method for measuring the average particle size of the inorganic porous material is as follows: The inorganic porous material is ultrasonically dispersed in absolute ethanol for 5 minutes and tested by using a laser particle size analyzer. D50 is the average particle size of the inorganic porous material, that is, a particle size corresponding to a volume proportion less than 50% of the total volume on a particle size distribution curve.

In some implementations of the present disclosure, the negative electrode active material layer further includes a conductive agent.

In the present disclosure, the negative electrode sheet includes both the inorganic porous material and the conductive agent, and electrochemical performance of the battery can be further improved through a synergistic effect of the inorganic porous material and the conductive agent.

In some implementations of the present disclosure, the conductive agent accounts for 0.1% to 5% of total content of the active material layer.

It will be understood that the conductive agent in the negative electrode sheet is filled between the negative electrode active materials, and can store liquid and conduct electricity to some extent, but an exposed conductive interface thereof increases side reaction of the electrolyte. Therefore, the content of the conductive agent in the above range can ensure conductivity and a liquid storage amount of the negative electrode sheet, suppress side reaction of the electrode sheet, and ensure the rate performance and the cycle life of the battery.

In some specific implementations of the present disclosure, the conductive agent accounts for 0.1% to 2% of total content of the active material layer.

When the content of the conductive agent is in the range of 0.1% to 2%, a synergistic effect of the inorganic porous material and the conductive agent is stronger, and comprehensive performance of the battery is better.

In the present disclosure, the conductive agent may be one or a combination of conductive carbon black, carbon nanotubes, graphene, and carbon fibers. A conductive carbon black material may be one or a combination of acetylene black, furnace black, channel black, thermal black, lamp black, and Ketjen black. Carbon nanotubes may be one or a combination of carbon nanotubes with different tube diameters (1 to 100 nm) and different tube lengths (0.05 to 100 µm). Graphene may be one or a combination of graphene with different quantities of layers (1 to 1000 layers).

Correspondingly, an embodiment of the present disclosure further provides a battery, wherein the battery includes a positive electrode sheet, an electrolyte, a separator, and the negative electrode sheet provided in the first aspect. Because the battery includes the negative electrode sheet provided in the first aspect of the present disclosure, the battery has high specific capacity, rate performance, and cycle life, and meets more application requirements.

In the present disclosure, the battery may be any one of a lithium-ion battery or a sodium-ion battery.

In the present disclosure, the positive electrode sheet includes a current collector and a positive electrode active material layer coated on at least one surface of the current collector. The active material layer includes a positive electrode active material, a conductive agent, and a binder.

In the present disclosure, the positive electrode active material layer may be coated on one side of the current collector or may be coated on both sides of the current collector. When the positive electrode active material layer is coated on both surfaces of the current collector, the thickness, the surface density, the component content, and the like of the positive electrode active material layers respectively located on both surfaces of the current collector may be independently designed according to application requirements, and may be the same or different.

In the present disclosure, the positive current collector may be any one of aluminum foil, carbon coated aluminum foil, polymer coated aluminum foil, carbon cloth, carbon nanotube film, or carbon paper.

In the present disclosure, the separator may be one or a composite separator of polyethylene, polypropylene, and polyvinylidene fluoride.

In the present disclosure, the positive electrode active material may be one or a combination of lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate. The positive electrode active material is suitable for a lithium-ion battery.

In the present disclosure, the positive electrode active material may alternatively be one or a combination of transition metal oxide, polyanionic compound, organic polymer, and Prussian blue/white analog materials. The positive electrode active material is suitable for a sodium-ion battery.

In the present disclosure, the electrolyte is an organic solvent in which carriers are dissolved. The present disclosure imposes no limitation on the electrolyte, which may be selfdispensed according to an actual situation.

An embodiment of the present disclosure further provides an electric device. The electric device uses the battery provided in the embodiment of the present disclosure, and the electric device may have higher market competitiveness.

In some implementations of the present disclosure, the electric device includes but is not limited to a wearable electronic device such as a mobile phone, a notebook computer, a tablet computer, or a smart watch, an electronic cigarette, a new energy vehicle, an electric moped, an energy storage base station, or the like.

The following further describes the technical solutions of the present disclosure in a plurality of examples.

### Example 1

A negative electrode active material (artificial graphite), a conductive agent (conductive carbon black), sodium carboxymethyl cellulose (CMC), styrene butadiene rubber (SBR), and an inorganic porous material (porous silica) are mixed according to a ratio of 96:0.9:1:2:0.1. Powder materials and deionized water are stirred by using a homogenizer to form negative electrode slurry, and the slurry is evenly coated on a copper foil. For the silica, the dielectric constant is 1.6; the average particle size is 500 nm; the volume of the mesopores is 80%; and the volume of the macropores is 15%. FIG. 1 is a pore structure distribution curve of a porous silica according to an embodiment of the present disclosure, from which it can be seen that the porous silica includes mesopores and macropores.

A positive electrode active material lithium iron phosphate (LiFePO₄), a conductive agent (CNT), and a second binder (PVDF) are mixed according to a ratio of 97:1:2. Powder materials and NMP are stirred by using the homogenizer to form positive electrode slurry, and the slurry is evenly coated on an aluminum foil.

Ethylene carbonate (EC), dimethyl carbonate (DMC), and ethyl methyl carbonate (EMC) are mixed according to a volume ratio of 1:1:1 to prepare an electrolyte containing 1M LiPF₆.

A polypropylene separator is used to prepare a 2.0 Ah stacked battery.

### Example 2

A difference from Example 1 lies only in that: the mixing ratio of the negative electrode active material (artificial graphite), the conductive agent (conductive carbon black), the sodium carboxymethyl cellulose (CMC), the styrene butadiene rubber (SBR), and the inorganic porous material (porous silica) is 95:1.8:1:2:0.2.

### Example 3

A difference from Example 1 lies only in that: the mixing ratio of the negative electrode active material (artificial graphite), the conductive agent (conductive carbon black), the sodium carboxymethyl cellulose (CMC), the styrene butadiene rubber (SBR), and the inorganic porous material (porous silica) is 93.75:3:1:2:0.25.

### Example 4

A difference from Example 1 lies only in that: the mass ratio of the negative electrode active material (artificial graphite), the conductive agent (conductive carbon black), the sodium carboxymethyl cellulose (CMC), the styrene butadiene rubber (SBR), and the inorganic porous material (porous silica) is 96:0.5:1:2:0.5.

### Example 5

A difference from Example 1 lies only in that: the mass ratio of the negative electrode active material (artificial graphite), the conductive agent (conductive carbon black), the sodium carboxymethyl cellulose (CMC), the styrene butadiene rubber (SBR), and the inorganic porous material (porous silica) is 96:0.25:2:1:0.75.

### Example 6

A difference from Example 1 lies only in that: the mass ratio of the negative electrode active material (artificial graphite), the conductive agent (conductive carbon black), the sodium carboxymethyl cellulose (CMC), the styrene butadiene rubber (SBR), and the inorganic porous material (porous silica) is 95:0.5:1:2:1.5.

### Example 7

A difference from Example 1 lies only in that: the mixing ratio of the negative electrode active material (artificial graphite), the conductive agent (conductive carbon black), the sodium carboxymethyl cellulose (CMC), the styrene butadiene rubber (SBR), and the inorganic porous material (porous silica) is 95:0.2:1:2:1.8.

### Example 8

A difference from Example 1 lies only in that: the mixing ratio of the negative electrode active material (artificial graphite), the conductive agent (conductive carbon black), the sodium carboxymethyl cellulose (CMC), the styrene butadiene rubber (SBR), and the inorganic porous material (porous silica) is 96:0:1:2:1.

### Example 9

A difference from Example 1 lies only in that: the mixing ratio of the negative electrode active material (artificial graphite), the conductive agent (conductive carbon black), the sodium carboxymethyl cellulose (CMC), the styrene butadiene rubber (SBR), and the inorganic porous material (porous silica) is 95:0:1:2:2.

### Example 10

A difference from Example 1 lies only in that: the mixing ratio of the negative electrode active material (artificial graphite), the conductive agent (conductive carbon black), the sodium carboxymethyl cellulose (CMC), the styrene butadiene rubber (SBR), and the inorganic porous material (porous silica) is 94:0:1:2:3.

### Example 11

A difference from Example 1 lies only in that: the mixing ratio of the negative electrode active material (artificial graphite), the conductive agent (conductive carbon black), the sodium carboxymethyl cellulose (CMC), the styrene butadiene rubber (SBR), and the inorganic porous material (porous silica) is 93:0:1:2:4.

### Example 12

A difference from Example 1 lies only in that: the mixing ratio of the negative electrode active material (artificial graphite), the conductive agent (conductive carbon black), the sodium carboxymethyl cellulose (CMC), the styrene butadiene rubber (SBR), and the inorganic porous material (porous silica) is 92:0:1:2:5.

### Example 13

A difference from Example 12 lies only in that: the inorganic porous material is porous alumina, of which the dielectric constant is 6.5; the average particle size is 400 nm; the volume of the mesopores is 76%; and the volume of the macropores is 20%.

### Example 14

A difference from Example 12 lies only in that: the inorganic porous material is porous boehmite, of which the dielectric constant is 10; the average particle size is 800 nm; the volume of the mesopores is 60%; and the volume of the macropores is 18%.

### Example 15

A difference from Example 12 lies only in that: the inorganic porous material is porous titanium oxide, of which the dielectric constant is 48; the average particle size is 1000 nm; the volume of the mesopores is 92%; and the volume of the macropores is 5%.

### Example 16

A difference from Example 15 lies only in that: the inorganic porous material is porous titanium oxide, of which the dielectric constant is 48; the average particle size is 1000 nm; the volume of the mesopores is 42%; and the volume of the macropores is 21%.

### Example 17

A difference from Example 15 lies only in that: the inorganic porous material is porous titanium oxide, of which the dielectric constant is 48; the average particle size is 1000 nm; the volume of the mesopores is 25%; and the volume of the macropores is 26%.

To highlight beneficial effects of the embodiments of the present disclosure, the following comparative examples are provided.

### Comparative Example 1

A difference from Example 1 lies only in that: the mass ratio of the negative electrode active material (artificial graphite), the conductive agent (conductive carbon black), the sodium carboxymethyl cellulose (CMC), the styrene butadiene rubber (SBR), and the inorganic porous material (porous silica) is 91.99:5:1:2:0.01.

### Comparative Example 2

A difference from Example 1 lies only in that: the mass ratio of the negative electrode active material (artificial graphite), the conductive agent (conductive carbon black), the sodium carboxymethyl cellulose (CMC), the styrene butadiene rubber (SBR), and the inorganic porous material (porous silica) is 90:0:1:2:7.

The content of the inorganic porous material, the content of the conductive agent, the porosity and liquid absorption rate parameters in the negative electrode sheet of the present disclosure are shown in Table 1. Performance test results of the battery are shown in Table 2.

**Table 1**

| Test No. | Content of inorganic porous material (%) | Content of conductive agent (%) | Porosity of negative electrode sheet (%) | Liquid absorption rate of negative electrode sheet (mg/min) |
|---|---|---|---|---|
| Example 1 | 0.1 | 0.9 | 29 | 2.8 |
| Example 2 | 0.2 | 1.8 | 31 | 3.2 |
| Example 3 | 0.25 | 3 | 33 | 3.4 |
| Example 4 | 0.5 | 0.5 | 35 | 4.1 |
| Example 5 | 0.75 | 0.25 | 38 | 4.5 |
| Example 6 | 1.5 | 0.5 | 43 | 5.3 |
| Example 7 | 1.8 | 0.2 | 45 | 5.6 |
| Example 8 | 1 | 0 | 41 | 4.4 |
| Example 9 | 2 | 0 | 47 | 5.0 |
| Example 10 | 3 | 0 | 52 | 5.9 |
| Example 11 | 4 | 0 | 56 | 6.6 |
| Example 12 | 5 | 0 | 60 | 7.4 |
| Example 13 | 5 | 0 | 59 | 7.6 |
| Example 14 | 5 | 0 | 58 | 7.4 |
| Example 15 | 5 | 0 | 60 | 7.9 |
| Example 16 | 5 | 0 | 57 | 7.4 |
| Example 17 | 5 | 0 | 54 | 6.8 |
| Comparative Example 1 | 0.01 | 5 | 23 | 1.9 |
| Comparative Example 2 | 7 | 0 | 69 | 8.9 |

### Electrochemical performance test

The batteries prepared above (including the batteries in the comparative examples) are subjected to room-temperature testing using the Land Electronics CT3002A battery testing system, and test results are summarized in Table 2.

Battery discharge capacity test: At 25°C, a 0.1C/0.1C cycle test is performed on the battery within a voltage range of 2.0V to 3.8V (wherein charging is performed at 0.1C to a voltage of 3.8V, followed by a 30 min rest, then discharging is performed at 0.1C to a voltage of 2.0V - this sequence constituted one cycle). After 3 cycles, the discharge capacity of the battery in the third cycle is recorded and used as the discharge capacity of the battery.

### First-cycle charge/discharge test:

At 25°C, a 0.1C/0.1C cycle test is performed on the battery within a voltage range of 2.0V to 3.8V (charging is performed at 0.1C to a voltage of 3.8V, followed by a 10 min rest, then discharging is performed at 0.1C to a voltage of 2.0V - this sequence constituted one cycle). The first-cycle charge specific capacity and discharge specific capacity of the battery are recorded, and the first-cycle charge/discharge efficiency is calculated therefrom, wherein the first-cycle discharge efficiency of the battery (%) is calculated as = first-cycle charge specific capacity/first-cycle discharge specific capacity * 100%.

### Discharge rate test:

At 25°C, the battery is charged at 0.1C to a voltage of 3.8V, followed by a 30-min rest, then discharged at a 3C rate to a voltage of 2.0V. This cycle is repeated three times sequentially. The charge/discharge data from the third cycle is used to calculate discharge efficiency of the battery for rate performance evaluation. The discharge rate (%) is calculated as = third-cycle discharge specific capacity (3C)/third-cycle charge specific capacity (0.1C) * 100%.

### Charge rate test:

At 25°C, the battery is charged at 3C to a voltage of 3.8V, followed by a 30-min rest, and then discharged at 0.1C to a voltage of 2.0V. This cycle is repeated three times sequentially. The charge/discharge data from the third cycle is used to calculate charge efficiency of the battery. The charge rate (%) is calculated as: (third-cycle discharge specific capacity (0.1C)/third-cycle charge specific capacity (3C)) * 100%.

Cycle life test: At 25°C, the battery is charged at 1C to a voltage of 3.8V, followed by a 10-min rest, and then discharged at 1C to a voltage of 2.0V. This cycle is repeated 1000 times sequentially. The capacity retention rate is recorded, wherein the capacity retention rate after 1000 cycles (%) is calculated as: (discharge specific capacity after 1000 cycles/discharge specific capacity after the third cycle) * 100%.

**Table 2**

| Test No. | Battery discharge capacity (Ah) | Capacity retention rate after 1000 cycles (%) | Discharge rate (%) | Charge rate (%) | First-cycle charge/discharge efficiency (%) |
|---|---|---|---|---|---|
| Example 1 | 1.92 | 89.9 | 91.8 | 89.7 | 88.4 |
| Example 2 | 1.87 | 90.2 | 92.9 | 91.6 | 88.7 |
| Example 3 | 1.85 | 88.4 | 92.5 | 91.2 | 86.6 |
| Example 4 | 1.93 | 91.5 | 93.7 | 92.9 | 89.9 |
| Example 5 | 1.94 | 91.9 | 95.3 | 93.5 | 90.1 |
| Example 6 | 1.91 | 91.8 | 95.6 | 93.8 | 89.9 |
| Example 7 | 1.90 | 91.7 | 95.1 | 93.1 | 90.0 |
| Example 8 | 1.93 | 91.0 | 92.2 | 91.6 | 90.1 |
| Example 9 | 1.88 | 91.3 | 94.1 | 92.1 | 90.3 |
| Example 10 | 1.84 | 91.9 | 93.8 | 92.5 | 90.4 |
| Example 11 | 1.82 | 90.9 | 92.6 | 90.2 | 90.3 |
| Example 12 | 1.79 | 90.3 | 92.3 | 90.0 | 90.4 |
| Example 13 | 1.78 | 90.0 | 92.1 | 90.1 | 89.6 |
| Example 14 | 1.79 | 89.7 | 92.0 | 90.1 | 89.0 |
| Example 15 | 1.79 | 89.3 | 91.9 | 90.0 | 87.9 |
| Example 16 | 1.80 | 89.3 | 91.6 | 89.8 | 87.7 |
| Example 17 | 1.78 | 89.1 | 90.8 | 88.6 | 87.3 |
| Comparative Example 1 | 1.76 | 84.2 | 86.3 | 85.5 | 85.9 |
| Comparative Example 2 | 1.55 | 86.1 | 87.2 | 86.4 | 89.3 |

As seen from the data in Tables 1 to 2, compared with Comparative Example 1 and Comparative Example 2, the negative electrode sheet provided in the embodiments of the present disclosure contains an inorganic porous material at an appropriate mass percentage, the inorganic porous material partially or entirely replaces the conductive agent to be filled between the negative electrode active materials, regulating the porosity and the liquid absorption rate of the negative electrode sheet, which can significantly improve rate performance (discharge rate and charge rate) of the battery. In Comparative Example 1, an extremely small amount of inorganic porous material is added to the negative electrode sheet, resulting in low porosity and liquid absorption rate of the electrode sheet, a tortuous diffusion path for the electrolyte, and consequently high lithium-ion transfer impedance, thereby leading to poor rate performance of the battery. It can be seen that by adding the inorganic porous material to the negative electrode sheet to change the pore structure within the negative electrode sheet and increase the porosity and the liquid absorption rate of the negative electrode sheet, this significantly benefits the promotion of electrolyte adsorption and migration.

The foregoing descriptions are example implementations of present disclosure. It should be noted that a person of ordinary skill in the art may further make several improvements and refinements on this application without departing from the principles of present disclosure. These improvements and refinements also fall within the protection scope of present disclosure.

## Claims

1. A negative electrode sheet, wherein the negative electrode sheet comprises a current collector and a negative electrode active material layer coated on at least one surface of the current collector; the negative electrode active material layer comprising a negative electrode active material, an inorganic porous material, and a first binder; and the inorganic porous material accounting for 0.1% to 5% of total mass of the negative electrode active material layer.

2. The negative electrode sheet according to claim 1, wherein the inorganic porous material accounts for 0.2% to 3% of the total mass of the negative electrode active material layer.

3. The negative electrode sheet according to claim 1 or 2, wherein a porosity of the negative electrode sheet is 20% to 60%.

4. The negative electrode sheet according to any one of claims 1 to 3, wherein a liquid absorption rate of the negative electrode sheet is 2 to 8 mg/min.

5. The negative electrode sheet according to any one of claims 1 to 4, wherein a dielectric constant of the inorganic porous material is ε, and 0<ε≤50, or 0<ε≤10.

6. The negative electrode sheet according to any one of claims 1 to 5, wherein the inorganic porous material comprises mesopores, and a volume of the mesopores accounts for 10% to 95% of a total pore volume of the inorganic porous material.

7. The negative electrode sheet according to any one of claims 1 to 6, wherein an average particle size of the inorganic porous material is 10 to 1000 nm.

8. The negative electrode sheet according to any one of claims 1 to 7, wherein the inorganic porous material comprises at least one of porous silica, porous titanium oxide, porous alumina, or porous boehmite.

9. The negative electrode sheet according to any one of claims 1 to 8, wherein the negative electrode active material is a carbon-based material.

10. The negative electrode sheet according to any one of claims 1 to 9, wherein the negative electrode active material layer further comprises a conductive agent.

11. The negative electrode sheet according to claim 10, wherein the conductive agent accounts for 0.1% to 5% of the total mass of the negative electrode active material layer.

12. The negative electrode sheet according to claim 11, wherein the conductive agent accounts for 0.1% to 2% of the total mass of the negative electrode active material layer.

13. A battery, comprising a positive electrode sheet, an electrolyte, a separator, and the negative electrode sheet according to any one of claims 1 to 12.

14. An electric device, wherein the electric device comprises the battery according to claim 13.
